# EUROPEAN PATENT SPECIFICATION

(11) **EP 3 695 221 B1**
(45) Date of publication and mention of the grant of the patent: **19.02.2025**
(21) Application number: 18866404.9
(22) Date of filing: 12.10.2018
(51) Int. Cl.: G01N 29/44, G01N 29/24, G01N 29/36, B61K 9/12, G01N 29/04, G01N 29/30

(54) **ULTRASONIC TESTING INSPECTION WITH COUPLING VALIDATION**
INSPEKTION MITTELS ULTRASCHALLTEST MIT KOPPLUNGSVALIDIERUNG
INSPECTION PAR TEST ULTRASONORE AVEC VALIDATION DE COUPLAGE

(30) Priority: 12.10.2017 US 201762571448 P
(43) Date of publication of application: 19.08.2020
(73) Proprietor: Baker Hughes Energy Services LLC, Houston, TX 77079 (US)
(72) Inventor: WERNER, Daniel, 50354 Hurth (DE); HENRIX, Frank, 50354 Hurth (DE); FRANZEN, Andreas, 50354 Hurth (DE); FALTER, Stephan, 50354 Hurth (DE)
(74) Representative: Novagraaf Group
(86) International application number: PCT/US2018/055639
(87) International publication number: WO 2019/075347

(56) References cited:
- WO-A1-2017/007822
- CN-A- 103 884 773
- CN-B- 103 472 138
- DE-A1- 102014 119 056
- JP-A- 2009 145 232
- KR-A- 20110 065 866
- US-A- 4 240 281
- US-A- 5 864 065
- US-A- 6 019 001
- ZHANG YU ET AL: "Application of phased array ultrasonic inspection for EMUs wheel-set online", 2014 IEEE FAR EAST FORUM ON NONDESTRUCTIVE EVALUATION/TESTING, IEEE, 20 June 2014 (2014-06-20), pages 168 - 171, XP032664037, ISBN: 978-1-4799-4731-7, [retrieved on 20141016], DOI: 10.1109/FENDT.2014.6928255
- GAO XIAORONG ET AL: "Wheel and axle defect detecting technique using phased array ultrasonic", 2013 FAR EAST FORUM ON NONDESTRUCTIVE EVALUATION/TESTING: NEW TECHNOLOGY AND APPLICATION, IEEE, 17 June 2013 (2013-06-17), pages 40 - 45, XP032503675, ISBN: 978-1-4673-6018-0, [retrieved on 20131016], DOI: 10.1109/FENDT.2013.6635525

## Description

### BACKGROUND

Non-destructive testing (NDT) is a class of analytical techniques that can be used to inspect a target, without causing damage, to ensure that the inspected target meets required specifications. For this reason, NDT has found wide acceptance in industries such as aerospace, power generation, oil and gas transport or refining, and transportation, that employ structures that are not easily removed from their surroundings.

As an example, global railroad standards can require train wheels to be ultrasonically inspected after manufacture and during maintenance on a regular basis. In ultrasonic testing, acoustic (sound) energy in the form of waves can be directed towards the train wheel. As the ultrasonic waves contact and penetrate the train wheel, they can reflect from features such as outer surfaces and interior defects (e.g., cracks, porosity, etc.). An ultrasonic sensor can acquire ultrasonic measurements of acoustic strength as a function of time. Subsequently, these ultrasonic measurements can be analyzed to provide testing results that characterize defects present within a train wheel, such as their presence or absence, location, and/or size. ZHANG YU et al: "Application of phased array ultrasonic inspection for EMUs wheel-set online', 2014 IEEE FAR EAST FORUM ON NONDESTRUCTIVE EVALUATION / TESTING IEEE, 20 June 2014, pages 168-171 discloses wheel rim inspection; the phased array ultrasonic inspection is validated by means of a reference wheel provided with artificial defects located in different depths from the wheel thread.

### SUMMARY

The present invention is defined in the accompanying claims.

The accuracy of ultrasonic measurements can rely upon good coupling between the inspection ultrasonic probes and a target, such as a wheel. Coupling refers to the ability of ultrasonic beams to be reliably transmitted between the ultrasonic probes and the target. That is, there is substantially no impediment for ultrasonic beams to travel between the ultrasonic probes and the target. However, bad coupling can occur when the ultrasonic probe is in poor contact with the target. In one aspect, poor contact can occur due to gaps between the ultrasonic probes and the target arising from misalignment. In another aspect, poor contact can occur due to the presence of contaminants between the inspection ultrasonic probes and the target. In some instances, the target can be a train wheel

It can be desirable to validate ultrasonic testing results to ensure their accuracy. Absent validation, ultrasonic testing results can be misinterpreted, resulting in false conclusions that defects are absent or within acceptable limits. Such errors can lead to failure of wheels during operation, with catastrophic consequences such as equipment damage and human injury.

Accordingly, there exists an ongoing need for improved systems and methods for validating ultrasonic testing results.

An ultrasonic testing system is provided including one or more matrix array ultrasonic probes, a probe positioning assembly, and an analyzer. The probe positioning assembly is configured to mechanically couple to the one or more matrix array ultrasonic probes and to position the one or more matrix array ultrasonic probes for ultrasonic communication with a wheel including at least one coupling validation geometry. Each of the one or more matrix array ultrasonic probes is configured to emit a validation ultrasonic signal directed towards a coupling validation geometry within the wheel, to measure its emitted validation ultrasonic signal after reflection from a respective one of the at least one coupling validation geometry, and to at least one of, emit an ultrasonic inspection signal and measure an inspection ultrasonic signal reflected from a defect positioned within an inspection area of the wheel. The analyzer is configured to, receive the measured validation ultrasonic signal and the measured inspection ultrasonic signal, determine that the measured validation ultrasonic signal matches a reference validation signal, and output a first notification representing validation of the measured inspection ultrasonic signal.

In an embodiment, the analyzer can be configured to determine that the measured validation ultrasonic signal does not match the reference validation signal, and to output a second notification representing invalidation of the measured inspection ultrasonic signal..

In another embodiment, each of the matrix array ultrasonic probes can be configured to sweep the emitted validation ultrasonic beam through an arc of predetermined directions and to measure a plurality of validation ultrasonic signals after reflection from a plurality of respective coupling validation geometries.

In another embodiment, each of the matrix array ultrasonic probes emitting the inspection ultrasonic signal can be configured to sweep the inspection ultrasonic signal through an arc of predetermined directions and each of the matrix array ultrasonic probes measuring the reflected inspection ultrasonic beam can be configured to measure a plurality of inspection ultrasonic signals after reflection from a plurality of respective defects.

Embodiments of the matrix ultrasonic probes can adopt a variety of configurations. In one embodiment, the system includes at least two matrix ultrasonic probes and a probe holder can be configured to position the at least two matrix array ultrasonic probes with respect to one another in a configuration mimicking a curvature of a running tread of the wheel. In another embodiment, a first one of the at least two matrix ultrasonic probes can be configured to emit the inspection ultrasonic signal towards the inspection area, and a second one of the at least two matrix array ultrasonic probes can be configured to measure the inspection ultrasonic signal reflected from a defect within the inspection area. In a further aspect, a first one of the at least two matrix ultrasonic probes and a second one of the at least two ultrasonic probes can each be configured to emit the inspection ultrasonic signal towards the inspection area and to measure the inspection ultrasonic signal reflected from a defect within the inspection area.

In another embodiment, the probe positioning assembly can be configured to reversibly lift the wheel above an underlying surface and to rotate the wheel while lifted.

In another embodiment, the system can include an annunciator in communication with the analyzer. The annunciator can be configured to annunciate a first annunciation representing validation of the inspection ultrasonic signal in response to receipt of the first notification. The annunciator can also be configured to annunciate a second annunciation, different from the first annunciation, representing invalidation of the inspection ultrasonic signal in response to receipt of the second notification.

A method for ultrasonic inspection is provided. The method includes positioning one or more matrix array ultrasonic probes for ultrasonic communication with a wheel including at least one coupling validation geometry. The method also includes emitting, by each of the one or more matrix array ultrasonic probes, a validation ultrasonic signal directed towards a coupling validation geometry within the wheel. The method further includes measuring, by each of the one or more matrix array ultrasonic probes, its emitted validation ultrasonic signal after reflection from a respective one of the at least one coupling validation geometry. The method additionally includes emitting, by at least one of the matrix ultrasonic probes, an ultrasonic inspection signal towards an inspection area of the wheel. The method also includes measuring, by at least one of the matrix ultrasonic probes, the inspection ultrasonic signal after reflection from a defect positioned within the inspection area. The method additionally includes receiving, by an analyzer in communication with each of the one or more matrix array ultrasonic probes, the measured validation ultrasonic signal and the measured inspection ultrasonic signal. The method also includes determining, by the analyzer, that the measured validation ultrasonic signal matches a reference validation signal. The method additionally includes outputting, by the analyzer, a first notification representing validation of the measured inspection ultrasonic signal.

In an embodiment, the method can include, determining, by the analyzer, that the measured validation ultrasonic signal does not match the reference validation signal, and outputting, by the analyzer, a second notification representing invalidation of the measured inspection ultrasonic signal.

In another embodiment, each of the matrix array ultrasonic probes can be configured to sweep the emitted validation ultrasonic beam through an arc of predetermined directions, and to measure a plurality of validation ultrasonic signals after reflection from a plurality of respective coupling validation geometries.

In another embodiment, each of the matrix array ultrasonic probes emitting the inspection ultrasonic signal can be configured to sweep the inspection ultrasonic signal through an arc of predetermined directions, and each of the matrix array ultrasonic probes measuring the reflected inspection ultrasonic beam can be configured to measure a plurality of inspection ultrasonic signals after reflection from a plurality of respective defects within the inspection area.

In another embodiment, the at least one matrix array ultrasonic probe can adopt a variety of configurations. In one embodiemnt, the at least one matrix array ultrasonic probe can include at least two matrix ultrasonic probes. The at least two matrix array ultrasonic probes can be positioned with respect to one another in a configuration mimicking a curvature of a running tread of the wheel. In another embodiment, a first one of the at least two matrix ultrasonic probes can be configured to emit the inspection ultrasonic signal towards the inspection area, and a second one of the at least two matrix array ultrasonic probes can be configured to measure the inspection ultrasonic signal reflected from a defect within the inspection area. In another embodiment, a first one of the at least two matrix array ultrasonic probes and a second one of the at least two ultrasonic probes can each be configured to emit the inspection ultrasonic signal towards the inspection area and to measure the inspection ultrasonic signal reflected from a defect within the inspection area.

In another embodiment the one or more matrix array ultrasonic probes can be positioned with respect to the wheel while the wheel is lifted above an underlying surface.

In another embodiment, the method can further include rotating the wheel while lifted and after each matrix array ultrasonic probe measures its emitted validation ultrasonic signal and emits and/or measures its inspection ultrasonic signal.

In another embodiment, the wheel is a train wheel.

### BRIEF DESCRIPTION OF DRAWINGS

These and other features will be more readily understood from the following detailed description taken in conjunction with the accompanying drawings, in which:
FIG. 1 is an image illustrating a train and a train wheel:
FIG. 2A is an image illustrating one exemplary embodiment of an operating environment including a ultrasonic testing system having a ultrasonic probe for inspection of train wheels;
FIG. 2B is a schematic diagram illustrating a zoomed-in view of the ultrasonic testing system of FIG. 2A;
FIG. 3A is a side view of a portion of a train wheel illustrating ultrasonic probes of an existing ultrasonic testing system positioned thereon for ultrasonic testing;
FIG. 3B is a cross-sectional front view of FIG. 3A;
FIG. 4A is a diagram illustrating one exemplary embodiment of a matrix array ultrasonic probe;
FIG. 4B is a side view of a portion of a train wheel illustrating an exemplary embodiment of matrix array ultrasonic probe according to FIG. 4A positioned thereon for ultrasonic testing;
FIG.4C is a cross-sectional front view of FIG. 4B;
FIGS. 5A-5D are front cross-sectional views of other embodiments of train wheels illustrating coupling validation features and matrix array ultrasonic probes positioned thereon for ultrasonic testing;
FIG. 6 is a schematic illustration of an analysis system of the ultrasonic inspection system of FIGS. 4A-5D; and
FIG. 7 is a flow diagram illustrating an exemplary embodiment of a method for ultrasonic inspection and coupling validation using matrix array ultrasonic probes.

It is noted that the drawings are not necessarily to scale. The drawings are intended to depict only typical aspects of the subject matter disclosed herein, and therefore should not be considered as limiting the scope of the disclosure. Those skilled in the art will understand that the systems, devices, and methods specifically described herein and illustrated in the accompanying drawings are non-limiting exemplary embodiments and that the scope of the present invention is defined solely by the claims.

### DETAILED DESCRIPTION

Wheels, for example train wheels, can develop damage, such as cracks, over time during use. If this damage becomes too severe, it can cause the wheel to break. To avoid failure of wheels during service, they can be inspected periodically. In some cases, because damage is not visible on the surface of the wheel, inspection can include techniques that allow the interior of the wheel to be investigated, such as ultrasonic testing. In ultrasonic testing, ultrasonic probes can be positioned on the wheel and they can send and receive ultrasonic waves (high frequency sound waves) to detect defects beneath the surface of the wheel. When ultrasonic testing is performed correctly, ultrasonic waves can easily travel between the ultrasonic probes and the wheel. This condition, referred to as coupling, and can ensure that defects are accurately measured. Existing ultrasonic testing systems can use one or more first ultrasonic probes to measure defects and one or more second ultrasonic probes, different from the first ultrasonic probes, to make measurements that validate the ultrasonic coupling of the first ultrasonic probes. However, this technique assumes that coupling validation measurements acquired by the second probe(s) are applicable to the first ultrasonic probe(s). However, in some cases, this assumption can be false, and the defect measurements acquired by the first set of ultrasonic probes can be erroneous due to poor coupling. Accordingly, improved ultrasonic testing systems and corresponding methods are provided in which each ultrasonic probe is configured to measure defects within a target, such as a wheel, and to validate its coupling to the wheel. Because each ultrasonic probe can independently validate its coupling to the wheel, as long as its coupling remains validated, its defect measurements are ensured to be accurate.

Embodiments of ultrasonic testing systems and corresponding methods for validating ultrasonic measurements acquired for train wheels are discussed herein.

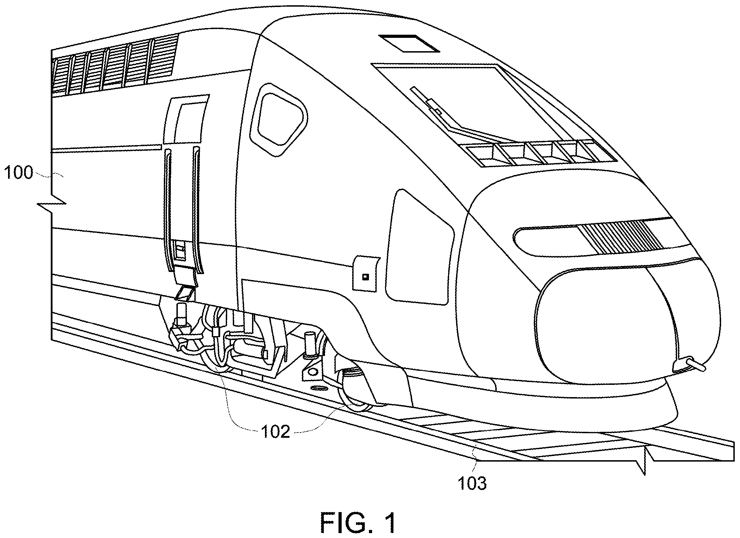

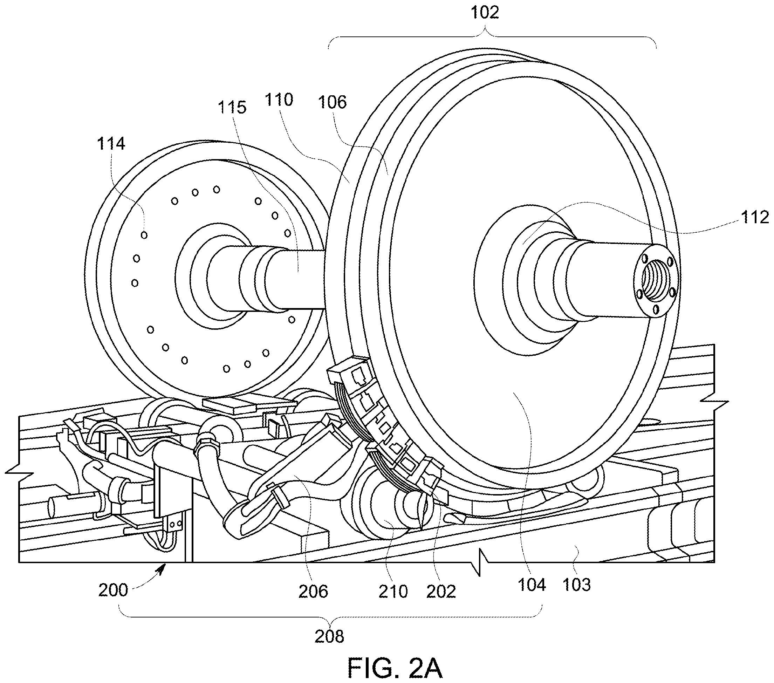

FIG. 1 illustrates an embodiment of a train 100 including train wheels 102 positioned on rails 103, and FIGS. 2A-2B illustrate one exemplary embodiment of an ultrasonic testing system 200 for inspection of a train wheel 102. As shown, the train wheel 102 includes a wheel disk 104, a running tread 106, and a wheel flange 110. The wheel disk 104 forms a center of the train wheel 102 and the running tread 106 forms a circumferential outer surface of the train wheel 102. The wheel flange 110 can be formed on one side of the train wheel 102 (e.g., an interior side) and extend radially outward from the running tread 106.

The wheel disk 104 includes one or more holes therethrough. As shown, a primary hole 112 is positioned at about a center of the wheel disk 104 and can be configured for receipt of an axle 115 therethrough. One or more secondary holes 114 can be formed radially outward from the primary hole 112 and configured for coupling other components to the train wheel 102, such as brake disks (not shown).

The ultrasonic testing system 200 can include one or more ultrasonic probes 202 and a probe positioning assembly 208 including a probe holder 204, a probe holder mount 206, and a lift and rotation unit 210. As shown, a predetermined number of ultrasonic probes 202 can be mechanically coupled to the probe holder 204 and oriented with respect to one another by the probe holder 204 (e.g., in an arcuate configuration mimicking a curvature of the running tread 106). Each probe holder 204 in turn can be coupled to the probe holder mount 206. When using the ultrasonic testing system 200 for inspection of train wheel 102, the lift and rotation unit 210 can be configured to lift the train wheel 102 above the underlying rail 103 and rotate the train wheel 102 about an axis extending through the primary hole 112 (e.g., via one or more rotation wheels 210a). The probe holder mount 206 can be coupled to the probe holder 204 and it can be configured to position the ultrasonic probes 202 adjacent to or in contact with the running tread 106 for ultrasonic communication with the train wheel 102 while lifted. While not shown, an ultrasonic couplant fluid can be provided between the ultrasonic probes 202 and the train wheel 102 to facilitate ultrasonic communication.

In general, when ultrasonic beams pass through a material, they can reflect from surfaces of the material, such as interior defects (e.g., cracks, pores, etc.) and outer surfaces. Material features, such as geometric boundaries and defects, can reflect ultrasonic beams in different ways. Some material features can reflect ultrasonic beams better than others, and the strength of the reflected ultrasonic beams can vary. Material features can also be at different distances from the ultrasonic probes and the time at which reflected ultrasonic beams reach the ultrasonic probes can vary. Measurements of the strength and time behavior of ultrasonic beams reflected from the train wheel 102 can be analyzed to determine the position and size of internal defects.

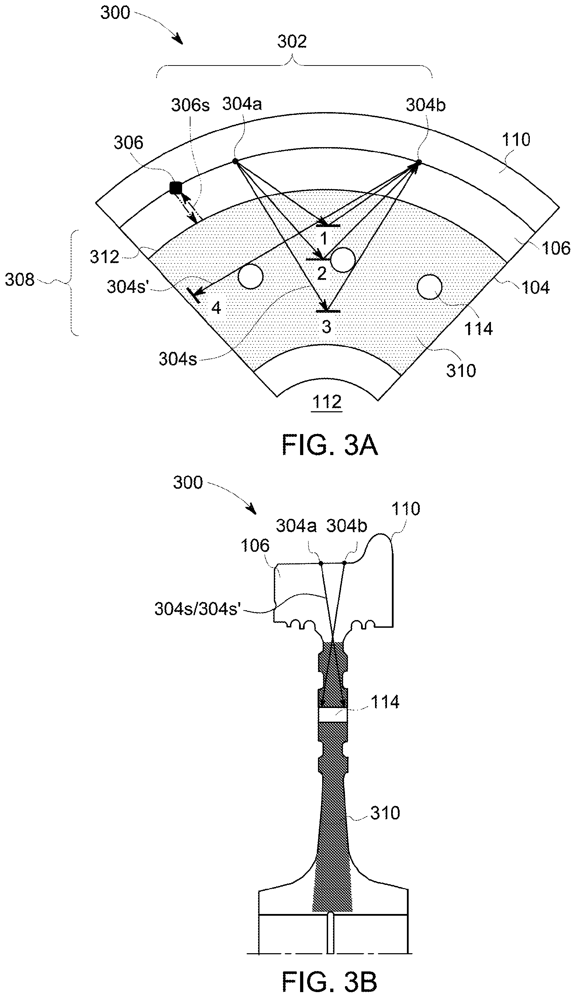

FIG. 3A is a side view of a portion of the train wheel 102, illustrating ultrasonic testing system 200 in the form of ultrasonic testing system 300 which includes two sets of ultrasonic probes 302 for ultrasonic testing according to an existing technique. As shown, the ultrasonic probes 302 are positioned on the train wheel 102 (e.g., an outer circumferential surface of the running tread 106) and they can include one or more inspection ultrasonic probes (e.g., 304a, 304b) and a validation ultrasonic probe (e.g., 306). A corresponding cross-sectional front view of the train wheel 102 is illustrated in FIG. 3B. The ultrasonic testing system 300 can also include the probe holder 204, the probe holder mount 206, and a lift and rotation unit 210, which are omitted for clarity.

Each of the ultrasonic probes 302a, 302b can include a single ultrasonic active element configured to generate and/or measure ultrasonic waves (also referred to as ultrasonic beams) for ultrasonic inspection of the train wheel 102 within an inspection area 310. The inspection area 310 is located between the primary hole 112 and the running tread 106. The inspection ultrasonic probes 304a, 304b can be configured to measure defects 308 (e.g., 1, 2, 3, 4) within the inspection area 310 by sending and receiving inspection ultrasonic signals 304s. In one aspect, the inspection ultrasonic probes 304a, 304b can be paired, one for transmitting and one for receiving, referred to as a "V-transmission configuration." As shown in FIG. 3A, a first inspection ultrasonic probe 304a can be configured to emit an inspection ultrasonic signal 304s. If a defect 308 is present in the path of the inspection ultrasonic signal 304s, it can reflect from that defect 308 (e.g., 1, 2, 3) and be measured by a second inspection ultrasonic probe 304b. In another aspect, a single one of the inspection ultrasonic probes 304a, 304b can both generate and measure an inspection ultrasonic beam that is reflected from one of the defects 308, also referred to as direct scan. As shown, the second inspection ultrasonic probe 304b can generate an ultrasonic inspection signal 304s' that is reflected from one of the defects 308 (e.g., 4) within the inspection area 310 and measure the reflected ultrasonic inspection signal 304s'. In either case, analysis of the measured ultrasonic inspection signals 304s, 304s' can provide estimates of the size and location of one or more of the defects 308 (e.g., 1, 2, 3, 4) within the inspection area 310.

The validation ultrasonic probe 306 is employed to validate the coupling of the inspection ultrasonic probes 304a, 304b. In general, wheel disk geometries include features that reflect ultrasonic beams with defined, characteristic, and well-known reflection properties. Such features include, but are not limited to the convex intersection from the running tread 106 to the wheel disk 104. These features can be referred to herein as coupling validation geometries 312. The validation ultrasonic probe 306 is configured to generate and measure validation ultrasonic signals 306s reflected from coupling validation geometries 312. When the validation ultrasonic signals 306s measured by the validation ultrasonic probe 306 agree with an expected behavior, coupling can be considered to be good or validated. When the validation ultrasonic signals 306s measured by the validation ultrasonic probe 306 deviate from an expected behavior, coupling can be considered to be poor or not validated.

Use of the validation ultrasonic probe 306 separate from the inspection ultrasonic probe(s) 302 can be problematic for a number of reasons, however.

In one aspect, it is assumed that when the validation ultrasonic probe 306 validates its own coupling to the train wheel 102, this result is applicable to the inspection ultrasonic probes 304a, 304b as well. However, under worst case scenarios, this assumption is not true. Therefore, existing ultrasonic testing systems, such as ultrasonic testing system 300, can fail to properly validate the inspection ultrasonic probes 304a, 304b, risking incorrect interpretation of ultrasonic testing results.

In another aspect, because they are configured to generate and measure ultrasonic beams for different features within the train wheel 102 (e.g., the defects 308 as compared to coupling validation geometries 312), the orientation of the inspection ultrasonic probes 304a, 304b and the validation ultrasonic probe 306 are different. That is, respective ones of the ultrasonic probes 302 cannot both measure defects 308 and perform validation.

In a further aspect, the need for a validation ultrasonic probe 306 separate from the inspection ultrasonic probes 304a, 304b can add additional cost and complexity to existing ultrasonic testing systems (e.g., ultrasonic testing system 300).

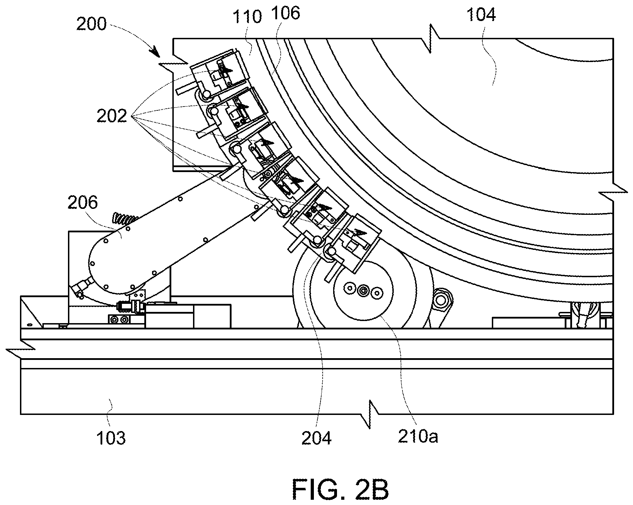

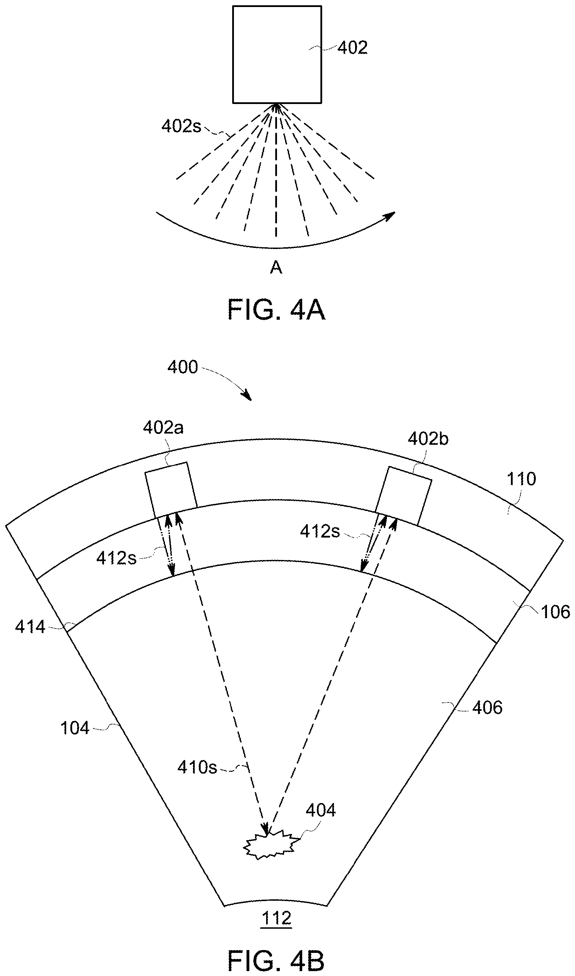

Embodiments of the present disclosure provide improved systems and methods for ultrasonic testing. An improved ultrasonic testing system 400 can be similar to the ultrasonic testing system 200, including the probe holder 204, the probe holder mount 206, and the lift and rotation unit 210 of FIG. 2. However, the ultrasonic probes 202 are replaced with matrix array ultrasonic probes 402, also referred to as phased array ultrasonic probes, illustrated in FIG. 4A. A matrix array ultrasonic probe 402 can include two or more ultrasonic active elements. These ultrasonic active elements can be configured to generate and measure ultrasonic beams and they can be arranged in a predetermined pattern with respect to one another (e.g., a line, a circle, a grid, etc.). Each of the ultrasonic active elements can also be configured to generate ultrasonic beams that are varied in strength and/or time with respect to ultrasonic beams generated by the other ultrasonic active elements. The various ultrasonic beams can interfere with each other to produce a net ultrasonic beam 402s in a predetermined direction. This process can be repeated as necessary to sweep the ultrasonic beam 402s through an arc A of different predetermined directions. Exemplary embodiments of matrix array ultrasonic probes 402 can be found in U.S. Patent No. 9,244,043.

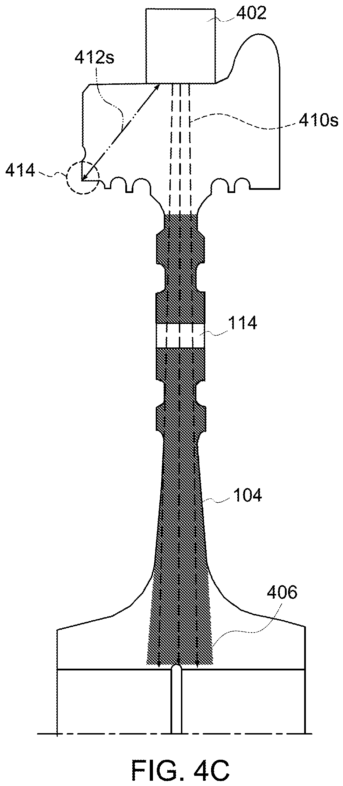

FIG. 4B is a side view of a portion of the train wheel 102. As shown, matrix array ultrasonic probes 402 can be positioned on or adjacent to the train wheel 102 (e.g., an outer circumferential surface of the running tread 106) for ultrasonic testing. A corresponding cross-sectional front view of the train wheel 102 is illustrated in FIG. 4C. Two matrix array ultrasonic probes 402a, 402b are illustrated and remaining portions of the improved ultrasonic testing system 400 are omitted for clarity. However, any number of matrix array probes can be employed without limit. Under circumstances where the system is employed with wheels other than train wheels, the matrix array ultrasonic probes can be positioned on or adjacent to the wheel at a suitable location, such as an outer circumferential surface of the wheel.

Each of the matrix array ultrasonic probes 402 are configured to acquire measurements for detection of defects 404 within an inspection area 406 and validation their ultrasonic coupling with respect to the train wheel 102. The inspection area 406 extends from the running tread 106 to the primary hole 112.

As shown in FIG. 4B, the matrix array ultrasonic probes 402 are arranged in a V-transmission configuration. The matrix array ultrasonic probe 402a can be configured to generate an inspection ultrasonic signal 410s that is directed towards the inspection area 406. If the defect 404 is present in the path of the inspection ultrasonic signal 410s, the inspection ultrasonic signal 410s can reflect from the defect 404 and be measured by matrix array ultrasonic probe 402b. As further shown, both of the matrix array ultrasonic probes 402a, 402b can also be configured to generate and measure a respective validation ultrasonic signal 412s reflected from a coupling validation geometry 414. Accordingly, the inspection ultrasonic signal 410s and the validation ultrasonic signal 412s can be emitted and reflected in different directions from each other. As discussed above, the coupling validation geometry 414 represents one or more features that reflect ultrasonic beams with defined, characteristic, and well-known reflection properties (e.g., features with convex radii). While V-transmission configurations have been discussed above, embodiments of the improved ultrasonic testing system can also employ matrix ultrasonic probes in a direct scan configuration, where each matrix ultrasonic probe both generates and measures inspection ultrasonic beams after reflection from a defect.

In certain embodiments, the train wheel 102 can be lifted from an underlying surface (e.g., the rail 103) while the inspection ultrasonic signal 410s and the validation ultrasonic signal 412s are emitted and reflected. The train wheel 102 can also be rotated while lifted to facilitate inspection of the substantially the entire volume of the inspection area 406. In one aspect, rotation can be performed after measurement of reflected inspection ultrasonic signal 410s and validation ultrasonic signal 412s. In another aspect, rotation can be performed at a selected speed during emission of inspection ultrasonic signal 410s and validation ultrasonic signal 412s, reflection of reflected inspection ultrasonic signal 410s and validation ultrasonic signal 412s, and/or measurement of reflected inspection ultrasonic signal 410s and validation ultrasonic signal 412s.

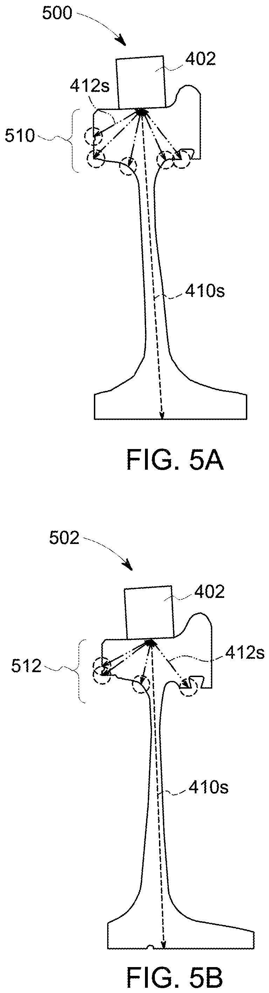

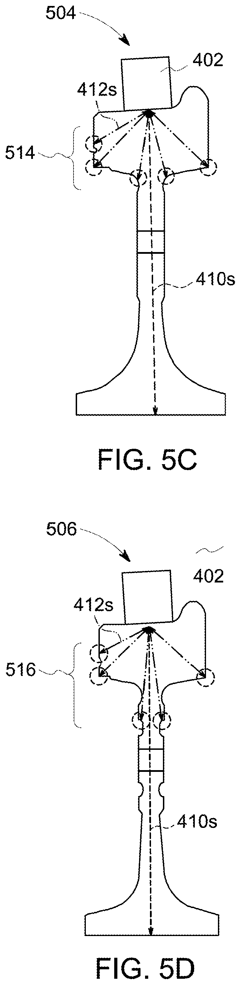

FIGS. 5A-5D illustrate front cross-sectional views of additional exemplary embodiments of train wheels 500, 502, 504, 506 having different additional coupling validation geometries 510, 512, 514, 516 and respective matrix array ultrasonic probes 402 positioned thereon for ultrasonic testing. The additional coupling validation geometries 510, 512, 514, 515 for each of the train wheels 500, 502, 504, 506 are circled for reference. As an example, additional coupling validation geometries 510, 512, 514, 516 can be present within the running tread 106, the wheel disk 104, or combinations thereof. As shown, embodiments of the matrix array ultrasonic probes 402 can direct additional validation ultrasonic signals 412s towards one or more of the coupling validation geometries 510, 512, 514, 516 of their respective train wheel 500, 502, 504, 506 in order to validate their coupling thereto. Further, as discussed above, the matrix array ultrasonic probes 402 can direct inspection ultrasonic signals 410s into the inspection area 406 for detection of defects 404.

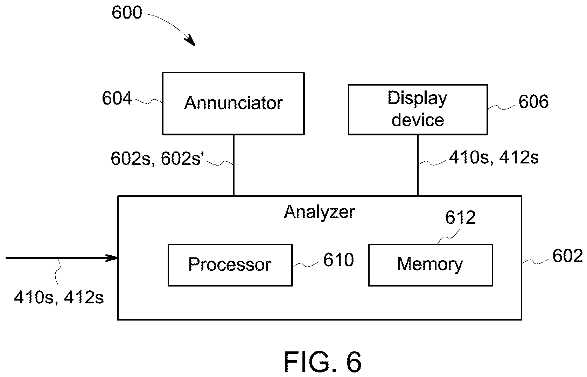

FIG. 6 illustrates an analysis system 600 of the improved ultrasonic testing system 400 configured for electronic communication with each of the matrix array ultrasonic probes 402. The analysis system 600 can include an analyzer 602, an annunciator 604, and a display device 606. The analyzer 602 can be any computing device employing a general purpose or application specific processor (e.g., processor 610) and can also include a memory 612. The processor 610 can include one or more processing devices, and the first memory 220 can include one or more tangible, non-transitory, machine-readable media collectively storing instructions executable by the first processor 216 to perform the methods and control actions described herein. Embodiments of the analyzer 602 can be implemented using analog electronic circuitry, digital electronic circuitry, and combinations thereof.

In one embodiment, the memory 612 can store a reference validation signal for each coupling validation geometry 414. The reference validation signal can represent a validation ultrasonic signal 412s measured under conditions of good coupling. The memory 612 can further store instructions and/or algorithms for determining whether the measured validation ultrasonic signal 412s reflected from a coupling validation geometry 414 matches a corresponding reference ultrasonic signal for that coupling validation geometry 414. As an example, a match can be determined when the strength of the measured validation ultrasonic signal 412s and the reference validation ultrasonic signal vary from one another by less than a predetermined threshold amount as a function of time. Conversely, a match may not be determined when the strength of the measured validation ultrasonic signal 412s and the reference validation ultrasonic signal vary from one another by greater than the predetermined threshold amount as a function of time.

In an alternative embodiment, the memory can store a reference validation signal strength for each validation coupling geometry. The reference validation signal strength can represent a threshold strength above which a validation ultrasonic signal can be considered to represent good coupling. The memory can further store instructions and/or algorithms for determining whether the measured validation ultrasonic signal reflected from a coupling validation geometry exhibits a strength greater than or equal to the reference validation signal strength for that coupling validation geometry. A measured validation ultrasonic signal having a strength greater than or equal to the reference validation signal strength can be considered to possess good coupling. Conversely, a measured validation ultrasonic signal determined having a strength less than the reference validation signal strength can be considered to possess poor coupling.

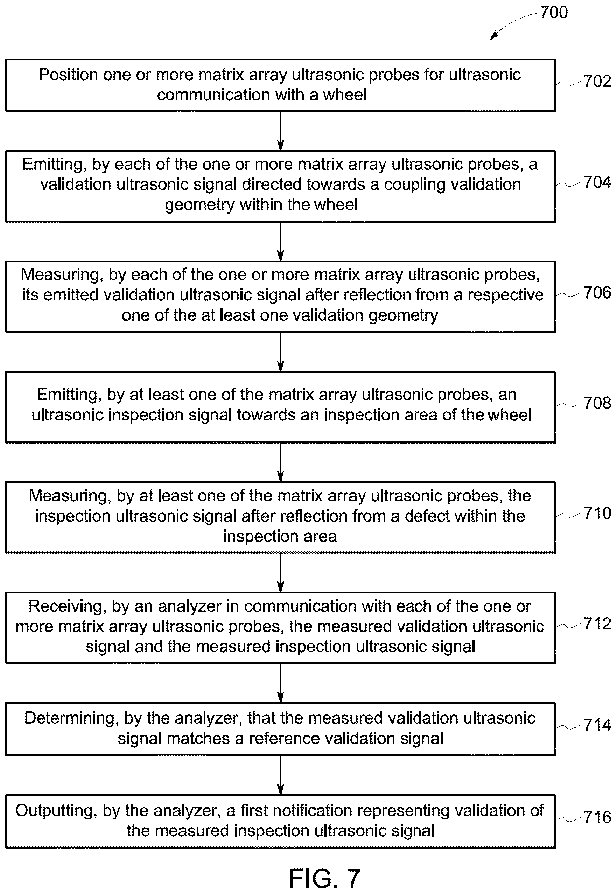

FIG 7 is a flow diagram illustrating an exemplary embodiment of a method 700 for ultrasonic inspection in which each of the matrix array ultrasonic probes 402 can be configured to both perform ultrasonic inspection of the train wheel 102 and validate its ultrasonic coupling with the train wheel 102. The method 700 is described below in connection with the improved ultrasonic testing system 400 of FIGS. 4A-6. As illustrated, the method 700 includes operations 702-716. However, alternative embodiments of the method can include more operations than illustrated in FIG. 7, and the operations can be performed in a different order than illustrated in FIG. 7, insofar as falling under the scope of the claims.

In operation 702, one or more matrix array ultrasonic probes 402 are positioned for ultrasonic communication with the train wheel 102. The matrix array ultrasonic probes 402 are positioned using the probe positioning assembly 208. As an example, the one or more matrix array ultrasonic probes 402 can be positioned on or adjacent to the running tread 106 of the train wheel 102. In further embodiments, the one or more matrix array ultrasonic probes 402 can include at least two matrix array ultrasonic probes (e.g., 402a, 402b) positioned with respect to one another in a configuration that mimics a curvature of the running tread 106. In operations 704-706, each of the one or more matrix array ultrasonic probes 402 emit the validation ultrasonic signal 412s towards a coupling validation geometry (e.g., 414) within the train wheel 102 and measure the corresponding reflected validation ultrasonic signals 412s. The train wheel 102 includes one or more coupling validation geometries (e.g., 414). Furthermore, each of the matrix array ultrasonic probes 402 can be configured to sweep the emitted validation ultrasonic signal 412s through an arc of predetermined directions and measure a plurality of validation ultrasonic signals 412s after reflection from a plurality of coupling validation geometries 414.

In operation 708, each of the matrix array ultrasonic probes 402 emits an ultrasonic inspection signal 410s towards the inspection area 406 of the train wheel 102. Similar to the validation ultrasonic signals 412s, the emitted inspection ultrasonic signals 410s can be swept through an arc of predetermined directions. In operation 710, at least one of the matrix array ultrasonic probes 402 can measure the emitted inspection ultrasonic signal 410s after reflection from a defect within the inspection area 406 (e.g., defect 404). Thus, each of the matrix array ultrasonic probes 402 that emits an inspection ultrasonic signal 410s can be configured to sweep the inspection ultrasonic signal 410s through an arc of predetermined directions, and each of the matrix array ultrasonic probes 402 that measures the reflected inspection ultrasonic signal 410s can be configured to measure a plurality of inspection ultrasonic signals 410s after reflection from a plurality of respective defects 404.

In certain embodiments, the one or more matrix array ultrasonic probes 402 can include at least two matrix array ultrasonic probes (e.g., 402a, 402b). In one aspect, a first one of the at least two matrix array ultrasonic probes 402a can be configured to emit the inspection ultrasonic signal 410s towards the inspection area 406, and a second one of the at least two matrix array ultrasonic probes 402b can be configured to measure the inspection ultrasonic signal 410s reflected from a defect 404 (e.g., a V-transmission configuration). In another aspect, the first matrix array ultrasonic probe 402a and the second matrix array ultrasonic probe 402b can each be configured to emit the inspection ultrasonic signal 410s and to measure its inspection ultrasonic signal 410s reflected from a defect 404 (e.g., a direct beam configuration).

The manner in which the inspection ultrasonic signals 410s and validation ultrasonic signals 412s are generated can be chosen based upon the train wheel 102 under inspection. In general, a predefined number of inspection ultrasonic beams can be generated, followed by a validation ultrasonic signal, or vice versa. In one aspect, the inspection ultrasonic signals and validation ultrasonic signals can be alternatingly generated. In another aspect, a predetermined number of inspection ultrasonic signal can be generated (e.g., approximately 100,) followed by one or more validation ultrasonic signal. This cycle can be repeated or varied as necessary for the duration of ultrasonic testing.

In operations 712-716, the analyzer 602 validate the ultrasonic coupling of the matrix array ultrasonic probes 402. In operation 712, the analyzer 602 receives a measured validation ultrasonic signal 412s and a measured inspection ultrasonic signal 410s (e.g., from matrix array ultrasonic probes 402). In operation 714, the analyzer 602 can determine that the measured validation ultrasonic signal 412s matches a reference validation ultrasonic signal. The reference validation ultrasonic signal 412 can be maintained by the memory 612 and the processor 610 can conduct a comparison of the two to determine a match. As an example, a match can be identified when the measured validation ultrasonic signal 412s and the reference validation ultrasonic signal differ by less than a threshold amount (e.g., on the basis of strength as a function of time). The analyzer 602 is configured to output a first notification signal 602s representing validation of the measured inspection ultrasonic signal 410s in operation 716. Conversely, under circumstances where the measured validation ultrasonic signal 412s and the reference validation ultrasonic signal differ by greater than or equal to the threshold amount (e.g., on the basis of strength as a function of time), the analyzer 602 can be configured to output also a second notification signal 602s' representing invalidation of the measured inspection ultrasonic signal 410s in operation 716.

The first and second notification signals 602s, 602s' can be received by the annunciator 604. The annunciator 604 can be configured to annunciate a first annunciation (e.g., audio, video, text, etc.) representing validation of the inspection ultrasonic signal 410s in response to receipt of the first notification signal 602s. The annunciator 604 can be configured to annunciate a second annunciation (e.g., audio, video, text, etc.) representing invalidation of the inspection ultrasonic signal 410s in response to receipt of the second notification signal 602s'.

Technical effects of the methods, systems, and devices described herein include integrated ultrasonic testing and ultrasonic coupling validation. In one aspect, ultrasonic coupling validation can be provided for each of the matrix array ultrasonic probes. That is, unlike existing ultrasonic testing system, ultrasonic coupling between each matrix ultrasonic probe and a train wheel can be measured directly, rather than assumed based upon measurements from other ultrasonic probes. This direct validation can ensure that ultrasonic testing results are properly interpreted. In another aspect, the use of matrix array ultrasonic probes in an ultrasonic testing system can substantially minimize the risk that defects are missed due to erroneous interpretations of ultrasonic testing results. In a further aspect, improved ultrasonic testing systems can be provided in which all ultrasonic probes are employed for detection of defects. That is in contrast to existing ultrasonic testing systems where some probes (e.g., validation ultrasonic probes) are employed solely for coupling validation and not defect detection. The absence of probes configured for different functions can reduce the complexity and cost of ultrasonic testing.

The subject matter described herein can be implemented in analog electronic circuitry, digital electronic circuitry, and/or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine-readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub-programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processor of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, (e.g., EPROM, EEPROM, and flash memory devices); magnetic disks, (e.g., internal hard disks or removable disks); magneto-optical disks; and optical disks (e.g., CD and DVD disks). The processor and the memory can be supplemented by, or incorporated in, special purpose logic circuitry.

To provide for interaction with a user, the subject matter described herein can be implemented on a computer having a display device, e.g., a CRT (cathode ray tube) or LCD (liquid crystal display) monitor, for displaying information to the user and a keyboard and a pointing device, (e.g., a mouse or a trackball), by which the user can provide input to the computer. Other kinds of devices can be used to provide for interaction with a user as well. For example, feedback provided to the user can be any form of sensory feedback, (e.g., visual feedback, auditory feedback, or tactile feedback), and input from the user can be received in any form, including acoustic, speech, or tactile input.

The techniques described herein can be implemented using one or more modules. As used herein, the term "module" refers to computing software, firmware, hardware, and/or various combinations thereof. At a minimum, however, modules are not to be interpreted as software that is not implemented on hardware, firmware, or recorded on a non-transitory processor readable recordable storage medium (i.e., modules are not software *per se*). Indeed "module" is to be interpreted to always include at least some physical, non-transitory hardware such as a part of a processor or computer. Two different modules can share the same physical hardware (e.g., two different modules can use the same processor and network interface). The modules described herein can be combined, integrated, separated, and/or duplicated to support various applications. Also, a function described herein as being performed at a particular module can be performed at one or more other modules and/or by one or more other devices instead of or in addition to the function performed at the particular module. Further, the modules can be implemented across multiple devices and/or other components local or remote to one another. Additionally, the modules can be moved from one device and added to another device, and/or can be included in both devices.

The subject matter described herein can be implemented in a computing system that includes a back-end component (e.g., a data server), a middleware component (e.g., an application server), or a front-end component (e.g., a client computer having a graphical user interface or a web browser through which a user can interact with an implementation of the subject matter described herein), or any combination of such back-end, middleware, and front-end components. The components of the system can be interconnected by any form or medium of digital data communication, e.g., a communication network. Examples of communication networks include a local area network ("LAN") and a wide area network ("WAN"), e.g., the Internet.

Certain exemplary embodiments are described to provide an overview of the principles of the structure, function, manufacture, and use of the systems, devices, and methods disclosed herein. One or more examples of these embodiments are illustrated in the accompanying drawings. The features illustrated or described in connection with one exemplary embodiment can be combined with the features of other embodiments. Further, in the present disclosure, like-named components of the embodiments generally have similar features, and thus within a particular embodiment each feature of each like-named component is not necessarily fully elaborated upon.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

One skilled in the art will appreciate further features and advantages of the invention based on the above-described embodiments.

## Claims

1. An ultrasonic testing system (400) and a wheel (102) to be inspected, the system comprising:
one or more matrix array ultrasonic probes (402);
a probe positioning assembly (208) configured to mechanically couple to the one or more matrix array ultrasonic probes (402) and to position the one or more matrix array ultrasonic probes (402) for ultrasonic communication with the wheel (102) which includes a wheel disk (104) forming a center of the wheel, a running tread (106) forming a circumferential outer surface of the wheel, and at least one coupling validation geometry (312) including a feature that reflects ultrasonic beams with defined, characteristic and known reflection properties;
wherein the one or more matrix array ultrasonic probes (402) is configured to:
emit a validation ultrasonic signal (412s) directed towards the coupling validation geometry (312) within the wheel (102);
measure its emitted validation ultrasonic signal after reflection from a respective one of the at least one coupling validation geometry (312); and
emit an ultrasonic inspection signal (410s) for measurement of an inspection ultrasonic signal reflected from a defect (404) positioned within an inspection area (310) located between a primary hole (112) positioned about the center of the wheel disk (104) and the running tread (106) of the wheel; and
an analyzer (602) configured to:
receive the measured validation ultrasonic signal (412s) and the measured inspection ultrasonic signal (410s);
determine whether the measured validation ultrasonic signal (412s) matches a reference validation signal; and
output a first notification representing validation of the measured inspection ultrasonic signal (410s) under the circumstances that the measured validation signal matches the reference validation signal;
wherein the at least one coupling validation geometry (312) comprises the convex intersection from the running tread (106) of the wheel (102) to the wheel disk (104) of the wheel (102).

2. The system and wheel
of claim 1, wherein the analyzer (602) is further configured to:
determine that the measured validation ultrasonic signal (412s) does not match the reference validation signal; and
output a second notification representing invalidation of the measured inspection ultrasonic signal (410s) under the circumstances that the measured validation signal does not match the reference validation signal.

3. The system and wheel of claim 1, wherein each of the matrix array ultrasonic probes (402) is configured to sweep the emitted validation ultrasonic beam (412s) through an arc of predetermined directions and to measure a plurality of validation ultrasonic signals after reflection from a plurality of respective coupling validation geometries (312).

4. The system and wheel of claim 1, wherein each of the matrix array ultrasonic probes (402) emitting the inspection ultrasonic signal is configured to sweep the inspection ultrasonic signal through an arc of predetermined directions and each of the matrix array ultrasonic probes (402) measuring the reflected inspection ultrasonic beam is configured to measure a plurality of inspection ultrasonic signals after reflection from a plurality of respective defects.

5. The system and wheel of claim 1, comprising a probe holder (204) and at least two matrix ultrasonic probes (402), wherein the probe holder (204) positions the at least two matrix array ultrasonic probes with respect to one another in a configuration mimicking a curvature of a running tread of the wheel.

6. The system and wheel of claim 5, wherein a first one of the at least two matrix ultrasonic probes (402) is configured to emit the inspection ultrasonic signal towards the inspection area, and a second one of the at least two matrix array ultrasonic probes is configured to measure the inspection ultrasonic signal reflected from a defect within the inspection area.

7. The system and wheel of claim 5, wherein a first one of the at least two matrix ultrasonic probes and a second one of the at least two ultrasonic probes are each configured to both emit the inspection ultrasonic signal towards the inspection area and to measure the inspection ultrasonic signal reflected from a defect within the inspection area.

8. The system and wheel of claim 1, wherein the probe positioning assembly (208) is configured to reversibly lift the wheel (102) above an underlying surface and to rotate the wheel (102) while lifted.

9. The system and wheel of claim 2, further comprising an annunciator (604) in
communication with the analyzer (602) and configured to annunciate a first annunciation representing validation of the inspection ultrasonic signal in response to receipt of the first notification and a second annunciation representing invalidation of the inspection ultrasonic signal in response to receipt of the second notification.

10. A method (700) of ultrasonic testing a wheel (102), the method comprising:
positioning (702) one or more matrix array ultrasonic probes (402) for ultrasonic communication with the wheel (102) which includes a wheel disk (104) forming a center of the wheel, a running tread (106) forming a circumferential outer surface of the wheel, and at least one coupling validation geometry (312);
emitting (704), by the one or more matrix array ultrasonic probes (402), a validation ultrasonic signal (412s) directed towards the coupling validation geometry (312) including a feature that reflects ultrasonic beams with defined, characteristic and known reflection properties within the wheel (102);
measuring (706), by the one or more matrix array ultrasonic probes (402), its emitted validation ultrasonic signal after reflection from a respective one of the at least one coupling validation geometry (312);
emitting (708), by the at least one of the matrix array ultrasonic probes (402), an ultrasonic inspection signal (410s) towards an inspection area (310) located between a primary hole (112) positioned about the center of the wheel disk (104) and the running tread (106) of the wheel (102);
measuring (710), by at least one of the matrix array ultrasonic probes (402), the inspection ultrasonic signal after reflection from a defect (404) positioned within the inspection area;
receiving (712), by an analyzer (602) in communication with each of the one or more matrix array ultrasonic probes (402), the measured validation ultrasonic signal and the measured inspection ultrasonic signal;
determining (714), by the analyzer (602), whether the measured validation ultrasonic signal matches a reference validation signal; and
outputting (716), by the analyzer (602), a first notification representing validation of the measured inspection ultrasonic signal (410s) under the circumstances that the measured validation signal matches the reference validation signal;
wherein the at least one coupling validation geometry (312) comprises the convex intersection from the running tread (106) of the wheel (102) to the wheel disk (104) of the wheel (102).

11. The method of claim 10, further comprising, by the analyzer (602),
determining that the measured validation ultrasonic signal does not match the reference validation signal; and
outputting a second notification representing invalidation of the measured inspection ultrasonic signal under the circumstances that the measured validation signal does not match the reference validation signal.

12. The method of claim 10, wherein each of the matrix array ultrasonic probes (402) is configured to sweep the emitted validation ultrasonic beam through an arc of predetermined directions and measure a plurality of validation ultrasonic signals after reflection from a plurality of respective coupling validation geometries.

13. The method of claim 10, wherein each of the matrix array ultrasonic probes (402) emitting the inspection ultrasonic signal is configured to sweep the inspection ultrasonic signal through an arc of predetermined directions, and each of the matrix array ultrasonic probes measuring the reflected inspection ultrasonic beam is configured to measure a plurality of inspection ultrasonic signals after reflection from a plurality of respective defects within the inspection area.

14. The method of claim 10, wherein the at least one matrix array ultrasonic probe comprises at least two matrix array ultrasonic probes, and wherein the at least two matrix array ultrasonic probes are positioned with respect to one another in a configuration mimicking a curvature of a running tread of the wheel (102).

15. The method of claim 14, wherein a first one of the at least two matrix ultrasonic probes (402) is configured to emit the inspection ultrasonic signal towards the inspection area, and a second one of the at least two matrix array ultrasonic probes is configured to measure the inspection ultrasonic signal reflected from a defect within the inspection area.

16. The method of claim 14, wherein a first one of the at least two matrix ultrasonic probes and a second one of the at least two ultrasonic probes are each configured to both emit the inspection ultrasonic signal towards the inspection area and to measure the inspection ultrasonic signal reflected from a defect (404) within the inspection area.

17. The method of claim 10, wherein the one or more matrix array ultrasonic probes (402) are positioned with respect to the wheel (102) while the wheel is lifted above an underlying surface.

18. The method of claim 17, further comprising rotating the wheel (102) while lifted and after each matrix array ultrasonic probe (402) measures its emitted validation ultrasonic signal and emits and/or measures its inspection ultrasonic signal.

19. The method of claim 10, wherein the wheel (102) is a train wheel.

## Patentansprüche

1. Ultraschallprüfsystem (400) und ein zu prüfendes Rad (102), wobei das System umfasst:
eine oder mehrere Matrixarray-Ultraschallsonden (402);
eine Sondenpositionierungsanordnung (208), die so konfiguriert ist, dass sie eine mechanische Kopplung mit der einen oder den mehreren Matrixarray-Ultraschallsonden (402) herstellt und die eine oder die mehreren Matrixarray-Ultraschallsonden (402) für eine Ultraschallkommunikation mit dem Rad (102) positioniert, das eine Radscheibe (104), die eine Radmitte bildet, eine Lauffläche (106), die eine umlaufende Außenfläche des Rades bildet, und mindestens eine Kopplungsvalidierungsgeometrie (312) einschließt, die ein Merkmal aufweist, das Ultraschallstrahlen mit definierten, charakteristischen und bekannten Reflexionseigenschaften reflektiert;
wobei die eine oder die mehreren Matrixarray-Ultraschallsonden (402) konfiguriert sind zum:
Aussenden eines Validierungs-Ultraschallsignals (412s), das auf die Kopplungsvalidierungsgeometrie (312) innerhalb des Rades (102) gerichtet ist;
Messen des ausgesendeten Validierungs-Ultraschallsignals nach der Reflexion von einer jeweiligen der mindestens einen Kopplungsvalidierungsgeometrie (312); und
Aussenden eines Ultraschallprüfsignals (410s) zum Messen eines Ultraschallprüfsignals, das von einem Defekt (404) reflektiert wird, der innerhalb eines Prüfbereichs (310) positioniert ist, der sich zwischen einem Hauptloch (112), das etwa in der Mitte der Radscheibe (104) positioniert ist, und der Lauffläche (106) des Rades befindet; und
einen Analysator (602), der konfiguriert ist zum:
Empfangen des gemessenen Validierungs-Ultraschallsignals (412s) und des gemessenen Ultraschallprüfsignals (410s);
Bestimmen, ob das gemessene Validierungs-Ultraschallsignal (412s) mit einem Referenzvalidierungssignal übereinstimmt; und
Ausgeben einer ersten Benachrichtigung, die eine Validierung des gemessenen Ultraschallprüfsignals (410s) unter der Voraussetzung darstellt, dass das gemessene Validierungssignal mit dem Referenzvalidierungssignal übereinstimmt;
wobei die mindestens eine Kopplungsvalidierungsgeometrie (312) den konvexen Schnittpunkt von der Lauffläche (106) des Rades (102) mit der Radscheibe (104) des Rades (102) umfasst.

2. System und Rad nach Anspruch 1, wobei der Analysator (602) ferner konfiguriert ist zum:
Bestimmen, dass das gemessene Validierungs-Ultraschallsignal (412s) nicht mit dem Referenzvalidierungssignal übereinstimmt; und
Ausgeben einer zweiten Benachrichtigung, die die Ungültigkeit des gemessenen Ultraschallprüfsignals (410s) unter der Voraussetzung darstellt, dass das gemessene Validierungssignal nicht mit dem Referenzvalidierungssignal übereinstimmt.

3. System und Rad nach Anspruch 1, wobei jede der Matrixarray-Ultraschallsonden (402) so konfiguriert ist, dass der ausgesendete Validierungs-Ultraschallstrahl (412s) einen Bogen mit vorgegebenen Richtungen durchläuft, und dass sie eine Vielzahl von Validierungs-Ultraschallsignalen nach der Reflexion von einer Vielzahl von jeweiligen Kopplungsvalidierungsgeometrien (312) misst.

4. System und Rad nach Anspruch 1, wobei jede der Matrixarray-Ultraschallsonden (402) , die das Ultraschallprüfsignal aussendet, so konfiguriert ist, dass das Ultraschallprüfsignal einen Bogen mit vorgegebenen Richtungen durchläuft, und jede der Matrixarray-Ultraschallsonden (402), die den reflektierten Ultraschallprüfstrahl misst, so konfiguriert ist, dass sie eine Vielzahl von Ultraschallprüfsignalen nach der Reflexion von einer Vielzahl von jeweiligen Defekten misst.

5. System und Rad nach Anspruch 1, umfassend einen Sondenhalter (204) und mindestens zwei Matrix-Ultraschallsonden (402), wobei der Sondenhalter (204) die mindestens zwei Matrixarray-Ultraschallsonden in einer Konfiguration relativ zueinander positioniert, die eine Krümmung einer Lauffläche des Rades nachahmt.

6. System und Rad nach Anspruch 5, wobei eine erste der mindestens zwei Matrix-Ultraschallsonden (402) so konfiguriert ist, dass sie das Ultraschallprüfsignal in Richtung des Prüfbereichs aussendet, und eine zweite der mindestens zwei Matrixarray-Ultraschallsonden so konfiguriert ist, dass sie das Ultraschallprüfsignal misst, das von einem Defekt innerhalb des Prüfbereichs reflektiert wird.

7. System und Rad nach Anspruch 5, wobei eine erste der mindestens zwei Matrix-Ultraschallsonden und eine zweite der mindestens zwei Ultraschallsonden jeweils so konfiguriert sind, dass sie sowohl das Ultraschallprüfsignal in Richtung des Prüfbereichs aussenden als auch das von einem Defekt innerhalb des Prüfbereichs reflektierte Ultraschallprüfsignal messen.

8. System und Rad nach Anspruch 1, wobei die Sondenpositionierungsanordnung (208) so konfiguriert ist, dass sie das Rad (102) reversibel über eine darunter liegende Oberfläche hebt und das Rad (102) in angehobenem Zustand dreht.

9. System und Rad nach Anspruch 2, ferner umfassend einen Melder (604), der mit dem Analysator (602) in Verbindung steht und so konfiguriert ist, dass er als Reaktion auf den Empfang der ersten Benachrichtigung eine erste Meldung meldet, die die Validierung des Ultraschallprüfsignals darstellt, und als Reaktion auf den Empfang der zweiten Benachrichtigung eine zweite Meldung meldet, die die Ungültigkeit des Ultraschallprüfsignals darstellt.

10. Verfahren (700) zum Ultraschallprüfen eines Rades (102), wobei das Verfahren umfasst:
Positionieren (702) von einer oder mehreren Matrixarray-Ultraschallsonden (402) zur Ultraschallkommunikation mit dem Rad (102), das eine Radscheibe (104), die eine Radmitte bildet, eine Lauffläche (106), die eine umlaufende Außenfläche des Rades bildet, und mindestens eine Kopplungsvalidierungsgeometrie (312) einschließt;
Aussenden (704) eines Validierungs-Ultraschallsignals (412s) durch die eine oder die mehreren Matrixarray-Ultraschallsonden (402), das auf die Kopplungsvalidierungsgeometrie (312) gerichtet ist und ein Merkmal aufweist, das Ultraschallstrahlen mit definierten, charakteristischen und bekannten Reflexionseigenschaften innerhalb des Rades (102) reflektiert;
Messen (706), durch die eine oder die mehreren Matrixarray-Ultraschallsonden (402), des ausgesendeten Validierungs-Ultraschallsignals nach der Reflexion von einer jeweiligen der mindestens einen Kopplungsvalidierungsgeometrie (312);
Aussenden (708), durch die mindestens eine der Matrixarray-Ultraschallsonden (402), eines Ultraschallprüfsignals (410s) in Richtung eines Prüfbereichs (310), der sich zwischen einem Hauptloch (112), das etwa in der Mitte der Radscheibe (104) positioniert ist, und der Lauffläche (106) des Rades (102) befindet;
Messen (710), durch mindestens eine der Matrixarray-Ultraschallsonden (402), des Ultraschallprüfsignals nach der Reflexion von einem Defekt (404), der innerhalb des Prüfbereichs positioniert ist;
Empfangen (712) des gemessenen Validierungs-Ultraschallsignals und des gemessenen Ultraschallprüfsignals durch einen Analysator (602), der mit jeder der einen oder mehreren Matrixarray-Ultraschallsonden (402) in Verbindung steht;
Bestimmen (714), durch den Analysator (602), ob das gemessene Validierungs-Ultraschallsignal mit einem Referenzvalidierungssignal übereinstimmt; und
Ausgeben (716), durch den Analysator (602), einer ersten Benachrichtigung, die eine Validierung des gemessenen Ultraschallprüfsignals (410s) unter der Voraussetzung darstellt, dass das gemessene Validierungssignal mit dem Referenzvalidierungssignal übereinstimmt;
wobei die mindestens eine Kopplungsvalidierungsgeometrie (312) den konvexen Schnittpunkt von der Lauffläche (106) des Rades (102) mit der Radscheibe (104) des Rades (102) umfasst.

11. Verfahren nach Anspruch 10, ferner umfassend das Bestimmen durch den Analysator (602), dass das gemessene Validierungs-Ultraschallsignal nicht mit dem Referenzvalidierungssignal übereinstimmt; und
Ausgeben einer zweiten Benachrichtigung, die die Ungültigkeit des gemessenen Ultraschallprüfsignals unter der Voraussetzung darstellt, dass das gemessene Validierungssignal nicht mit dem Referenzvalidierungssignal übereinstimmt.

12. Verfahren nach Anspruch 10, wobei jede der Matrixarray-Ultraschallsonden (402) so konfiguriert ist, dass der emittierte Validierungs-Ultraschallstrahl einen Bogen mit vorgegebenen Richtungen durchläuft, und dass sie eine Vielzahl von Validierungs-Ultraschallsignalen nach der Reflexion von einer Vielzahl entsprechender Kopplungsvalidierungsgeometrien misst.

13. Verfahren nach Anspruch 10, wobei jede der Matrixarray-Ultraschallsonden (402), die das Ultraschallprüfsignal aussenden, so konfiguriert ist, dass das Ultraschallprüfsignal einen Bogen mit vorgegebenen Richtungen durchläuft, und wobei jede der Matrixarray-Ultraschallsonden, die den reflektierten Ultraschallprüfstrahl messen, so konfiguriert ist, dass sie eine Vielzahl von Ultraschallprüfsignalen nach der Reflexion von einer Vielzahl von jeweiligen Defekten innerhalb des Prüfbereichs misst.

14. Verfahren nach Anspruch 10, wobei die mindestens eine Matrixarray-Ultraschallsonde mindestens zwei Matrixarray-Ultraschallsonden umfasst und wobei die mindestens zwei Matrixarray-Ultraschallsonden in einer Konfiguration relativ zueinander positioniert sind, die eine Krümmung einer Lauffläche des Rades (102) nachahmt.

15. Verfahren nach Anspruch 14, wobei eine erste der mindestens zwei Matrix-Ultraschallsonden (402) so konfiguriert ist, dass sie das Ultraschallprüfsignal in Richtung des Prüfbereichs aussendet, und eine zweite der mindestens zwei Matrixarray-Ultraschallsonden so konfiguriert ist, dass sie das Ultraschallprüfsignal misst, das von einem Defekt innerhalb des Prüfbereichs reflektiert wird.

16. Verfahren nach Anspruch 14, wobei eine erste der mindestens zwei Matrix-Ultraschallsonden und eine zweite der mindestens zwei Ultraschallsonden jeweils so konfiguriert sind, dass sie sowohl das Ultraschallprüfsignal in Richtung des Prüfbereichs aussenden als auch das von einem Defekt (404) innerhalb des Prüfbereichs reflektierte Ultraschallprüfsignal messen.

17. Verfahren nach Anspruch 10, wobei die eine oder die mehreren Matrixarray-Ultraschallsonden (402) in Bezug auf das Rad (102) positioniert werden, während das Rad über eine darunter liegende Oberfläche gehoben wird.

18. Verfahren nach Anspruch 17, ferner umfassend das Drehen des Rades (102) im angehobenen Zustand und nachdem jede Matrixarray-Ultraschallsonde (402) ihr ausgesendetes Validierungs-Ultraschallsignal gemessen und ihr Ultraschallprüfsignal ausgesendet und/oder gemessen hat.

19. Verfahren nach Anspruch 10, wobei das Rad (102) ein Eisenbahnrad ist.

## Revendications

1. Système de test à ultrasons (400) et roue (102) à inspecter, le système comprenant :
un ou plusieurs capteurs à ultrasons de réseau matriciel (402) ;
un ensemble de positionnement de capteur (208) configuré pour s'accoupler mécaniquement aux un ou plusieurs capteurs à ultrasons de réseau matriciel (402) et pour positionner les un ou plusieurs capteurs à ultrasons de réseau matriciel (402) pour une communication à ultrasons avec la roue (102) qui comporte un disque de roue (104) formant un centre de la roue, une bande de roulement (106) formant une surface extérieure circonférentielle de la roue, et au moins une géométrie de validation d'accouplement (312) comportant un élément qui réfléchit des faisceaux à ultrasons avec des propriétés de réflexion définies, caractéristiques et connues ;
dans lesquels les un ou plusieurs capteurs à ultrasons de réseau matriciel (402) sont configurés pour :
émettre un signal à ultrasons de validation (412s) dirigé vers la géométrie de validation d'accouplement (312) au sein de la roue (102) ;
mesurer son signal à ultrasons de validation émis après réflexion à partir d'une géométrie respective de l'au moins une géométrie de validation d'accouplement (312) ; et
émettre un signal à ultrasons d'inspection (410s) pour la mesure d'un signal à ultrasons d'inspection réfléchi à partir d'un défaut (404) positionné au sein d'une zone d'inspection (310) située entre un trou primaire (112) positionné autour du centre du disque de roue (104) et la bande de roulement (106) de la roue ; et
un analyseur (602) configuré pour :
recevoir le signal à ultrasons de validation mesuré (412s) et le signal à ultrasons d'inspection mesuré (410s) ;
déterminer si le signal à ultrasons de validation mesuré (412s) correspond à un signal de validation de référence ; et
délivrer en sortie une première notification représentant une validation du signal à ultrasons d'inspection mesuré (410s) dans les circonstances où le signal de validation mesuré correspond au signal de validation de référence ;
dans lesquels l'au moins une géométrie de validation d'accouplement (312) comprend l'intersection convexe à partir de la bande de roulement (106) de la roue (102) vers le disque de roue (104) de la roue (102).

2. Système et roue selon la revendication 1, dans lesquels l'analyseur (602) est en outre configuré pour :
déterminer que le signal à ultrasons de validation mesuré (412s) ne correspond pas au signal de validation de référence ; et
générer une seconde notification représentant une invalidation du signal à ultrasons d'inspection mesuré (410s) dans les circonstances où le signal de validation mesuré ne correspond pas au signal de validation de référence.

3. Système et roue selon la revendication 1, dans lesquels chacun des capteurs à ultrasons de réseau matriciel (402) est configuré pour balayer le faisceau à ultrasons de validation émis (412s) à travers un arc de directions prédéterminées et pour mesurer une pluralité de signaux à ultrasons de validation après réflexion à partir d'une pluralité de géométries de validation d'accouplement (312) respectives.

4. Système et roue selon la revendication 1, dans lesquels chacun des capteurs à ultrasons de réseau matriciel (402) émettant le signal à ultrasons d'inspection est configuré pour balayer le signal à ultrasons d'inspection à travers un arc de directions prédéterminées et chacun des capteurs à ultrasons de réseau matriciel (402) mesurant le faisceau à ultrasons d'inspection réfléchi est configuré pour mesurer une pluralité de signaux à ultrasons d'inspection après réflexion à partir d'une pluralité de défauts respectifs.

5. Système et roue selon la revendication 1, comprenant un support de capteur (204) et au moins deux capteurs à ultrasons de réseau matriciel (402), dans lesquels le support de capteur (204) positionne les au moins deux capteurs à ultrasons de réseau matriciel l'un par rapport à l'autre dans une configuration imitant une courbure d'une bande de roulement de la roue.

6. Système et roue selon la revendication 5, dans lesquels un premier des au moins deux capteurs à ultrasons de réseau matriciel (402) est configuré pour émettre le signal à ultrasons d'inspection vers la zone d'inspection, et un second des au moins deux capteurs à ultrasons de réseau matriciel est configuré pour mesurer le signal à ultrasons d'inspection réfléchi à partir d'un défaut au sein de la zone d'inspection.

7. Système et roue selon la revendication 5, dans lesquels un premier des au moins deux capteurs à ultrasons de réseau matriciel et un second des au moins deux capteurs à ultrasons sont chacun configurés aussi bien pour émettre le signal à ultrasons d'inspection vers la zone d'inspection que pour mesurer le signal à ultrasons d'inspection réfléchi à partir d'un défaut au sein de la zone d'inspection.

8. Système et roue selon la revendication 1, dans lesquels l'ensemble de positionnement de capteur (208) est configuré pour soulever de manière réversible la roue (102) au-dessus d'une surface sous-jacente et pour mettre en rotation la roue (102) tandis qu'elle est soulevée.

9. Système et roue selon la revendication 2, comprenant en outre un annonciateur (604) en communication avec l'analyseur (602) et configuré pour annoncer une première annonce représentant une validation du signal à ultrasons d'inspection en réponse à la réception de la première notification et une seconde annonce représentant une invalidation du signal à ultrasons d'inspection en réponse à la réception de la seconde notification.

10. Procédé (700) de test à ultrasons d'une roue (102), le procédé comprenant :
le positionnement (702) d'un ou plusieurs capteurs à ultrasons de réseau matriciel (402) pour une communication à ultrasons avec la roue (102) qui comporte un disque de roue (104) formant un centre de la roue, une bande de roulement (106) formant une surface extérieure circonférentielle de la roue, et au moins une géométrie de validation d'accouplement (312) ;
l'émission (704), par les un ou plusieurs capteurs à ultrasons de réseau matriciel (402), d'un signal à ultrasons de validation (412s) dirigé vers la géométrie de validation d'accouplement (312) comportant un élément qui réfléchit des faisceaux à ultrasons avec des propriétés de réflexion définies, caractéristiques et connues au sein de la roue (102) ;
la mesure (706), par les un ou plusieurs capteurs à ultrasons de réseau matriciel (402), de son signal à ultrasons de validation émis après réflexion à partir d'une géométrie respective de l'au moins une géométrie de validation d'accouplement (312) ;
l'émission (708), par l'au moins l'un des capteurs à ultrasons de réseau matriciel (402), d'un signal à ultrasons d'inspection (410s) vers une zone d'inspection (310) située entre un trou primaire (112) positionné autour du centre du disque de roue (104) et la bande de roulement (106) de la roue (102) ;
la mesure (710), par l'au moins l'un des capteurs à ultrasons de réseau matriciel (402), du signal à ultrasons d'inspection après réflexion à partir d'un défaut (404) positionné au sein de la zone d'inspection ;
la réception (712), par un analyseur (602) en communication avec chacun des un ou plusieurs capteurs à ultrasons de réseau matriciel (402), du signal à ultrasons de validation mesuré et du signal à ultrasons d'inspection mesuré ;
la détermination (714), par l'analyseur (602), de si le signal à ultrasons de validation mesuré correspond à un signal de validation de référence ; et
la délivrance en sortie (716), par l'analyseur (602), d'une première notification représentant une validation du signal à ultrasons d'inspection mesuré (410s) dans les circonstances où le signal de validation mesuré correspond au signal de validation de référence ;
dans lesquels l'au moins une géométrie de validation d'accouplement (312) comprend l'intersection convexe à partir de la bande de roulement (106) de la roue (102) vers le disque de roue (104) de la roue (102).

11. Procédé selon la revendication 10, comprenant en outre, par l'analyseur (602), la détermination du fait que le signal à ultrasons de validation mesuré ne correspond pas au signal de validation de référence ; et
la délivrance en sortie d'une seconde notification représentant une invalidation du signal à ultrasons d'inspection mesuré dans les circonstances où le signal de validation mesuré ne correspond pas au signal de validation de référence.

12. Procédé selon la revendication 10, dans lequel chacun des capteurs à ultrasons de réseau matriciel (402) est configuré pour balayer le faisceau à ultrasons de validation émis à travers un arc de directions prédéterminées et mesurer une pluralité de signaux à ultrasons de validation après réflexion à partir d'une pluralité de géométries de validation d'accouplement respectives.

13. Procédé selon la revendication 10, dans lequel chacun des capteurs à ultrasons de réseau matriciel (402) émettant le signal à ultrasons d'inspection est configuré pour balayer le signal à ultrasons d'inspection à travers un arc de directions prédéterminées, et chacun des capteurs à ultrasons de réseau matriciel mesurant le faisceau à ultrasons d'inspection réfléchi est configuré pour mesurer une pluralité de signaux à ultrasons d'inspection après réflexion à partir d'une pluralité de défauts respectifs au sein de la zone d'inspection.

14. Procédé selon la revendication 10, dans lequel l'au moins un capteur à ultrasons de réseau matriciel comprend au moins deux capteurs à ultrasons de réseau matriciel, et dans lequel les au moins deux capteurs à ultrasons de réseau matriciel sont positionnés l'un par rapport à l'autre dans une configuration imitant la courbure d'une bande de roulement de la roue (102).

15. Procédé selon la revendication 14, dans lequel un premier des au moins deux capteurs à ultrasons de réseau matriciel (402) est configuré pour émettre le signal à ultrasons d'inspection vers la zone d'inspection, et un second des au moins deux capteurs à ultrasons de réseau matriciel est configuré pour mesurer le signal à ultrasons d'inspection réfléchi à partir d'un défaut au sein de la zone d'inspection.

16. Procédé selon la revendication 14, dans lequel un premier des au moins deux capteurs à ultrasons de réseau matriciel et un second des au moins deux capteurs à ultrasons sont chacun configurés aussi bien pour émettre le signal à ultrasons d'inspection vers la zone d'inspection que pour mesurer le signal à ultrasons d'inspection réfléchi à partir d'un défaut (404) au sein de la zone d'inspection.

17. Procédé selon la revendication 10, dans lequel les un ou plusieurs capteurs à ultrasons de réseau matriciel (402) sont positionnés par rapport à la roue (102) tandis que la roue est soulevée au-dessus d'une surface sous-jacente.

18. Procédé selon la revendication 17, comprenant en outre la mise en rotation de la roue (102) tandis qu'elle est soulevée et après que chaque capteur à ultrasons de réseau matriciel (402) a mesuré son signal à ultrasons de validation émis et a émis et/ou mesuré son signal à ultrasons d'inspection.

19. Procédé selon la revendication 10, dans lequel la roue (102) est une roue de train.
